# EUROPEAN PATENT APPLICATION

(11) **EP 1 364 576 A2**
(43) Date of publication of application: **26.11.2003**
(21) Application number: 03076571.3
(22) Date of filing: 23.05.2003
(51) Int. Cl.: A01K 1/015

(54) **Stable with mat on floor**

(30) Priority: 23.05.2002 NL 1020660
(71) Applicant: Pasture B.V., 8938 AV Leeuwaarden (NL); Betonindustrie B.V. Concrelit, 8831 TV Steenwijk (NL)
(72) Inventor: Zeinstra, Jan Sebastianus, 1231 LM Loosdrecht (NL); Van der Zee, Tjeerd-Dirk, 8605 AA Sneek (NL)
(74) Representative: Grootscholten, Johannes Antonius Maria

(57) **Abstract**

The invention relates to a stable for livestock, comprising a building with a floor of concrete (4) and a mat (7) of a resilient material, such as plastic and/or rubber, on the concrete floor, wherein the mat is arranged on the stable floor and fixed against shifting by at least one element (1) for fastening to the stable floor and for connecting to the mat.

## Description

The present invention relates to a stable for livestock, comprising a building with a floor of concrete and a mat of resilient material, such as plastic and/or rubber, on the concrete floor.

Such a stable is known, wherein the mat on the concrete floor is desirable because livestock, for instance cows, do not usually like to walk on the concrete floor, particularly when the concrete floor is slippery. This has been found in practice. The livestock is therefore generally accustomed to walking outside in the meadow on the much more resilient surface of the meadow.

The mat is thus intended to simulate to some extent the situation outside in the meadow, as far as this is possible. The welfare of the livestock is important from a social viewpoint and it has further been found that the production of the livestock, measured for instance in quantities of milk, is higher when the livestock feel more comfortable.

It has however been found problematic to arrange on the concrete floor a mat of a material with which the conditions in the meadow can to some extent be simulated without the danger of shifting thereof. Such material of the mat is for instance rubber and/or plastic, optionally with a filling in the case of a closed mat. No practicable adhesives are known with which such a mat can be fixed durably on the concrete floor. Such adhesives must also be able to withstand the conditions prevailing in a stable. This refers particularly to the effect of urine and manure on such adhesives, which cannot withstand them.

It is of course desirable that the mat is fixed, since if it could shift the animals of the livestock could fall as a result of walking on the mat when it shifts.

A first solution here for from the known art is that the mats are made so thick that they remain in place because of their own weight. An obvious drawback here are the associated costs. In order to fix the mat through its own weight much more material is used for the mat than is necessary to achieve the desired effect of simulating a meadow.

It is furthermore a drawback, particularly in the case of loose mats, that dirt can accumulate thereunder.

The present invention has for its object to obviate or at least considerably diminish the problems of the known art, for which purpose the mat is arranged on the stable floor and fixed against shifting by at least one element for fastening to the stable floor and for connecting to or connected to the mat. Such an element according to the present invention then forms an intermediary between the concrete floor and the mat in order to fix the mat onto the concrete floor. The mat can have the thickness required for the desired effect and does not have to be made thicker. The costs are hereby also considerably limited compared to the solutions known in the art. It is moreover ensured that the mat is then fixed onto the concrete floor.

Within the thus defined scope according to claim 1 of the present invention different preferred embodiments and alternatives thereto are possible. Some of these are defined in the dependent claims 2-6.

In a preferred embodiment according to claim 2, wherein the element is arranged in the concrete of the concrete floor, the concrete floor itself forms an anchoring for the mat in that the concrete of the concrete floor engages the element and an effective fixing is established by the connection of the element to the mat.

According to claim 3 the element can herein take the form of a grid. An effective design is hereby realized to provide a high degree of engagement on the element by the poured concrete of the concrete floor, while a large area of the element, which lies freely on the surface of the concrete floor, is simultaneously available for fixing of the mat. The very high degree of engagement is particularly favourable if the mats are placed or used at a location in the stable where a device, such as a per se known manure scraper, is also being used for cleaning purposes. A connection between mat and floor via the element which provides insufficient fixation, for instance if the mat can be released from the floor by manual force, cannot withstand the forces exerted on the mat by such a device, and so the mat can be simply pulled loose by this device. According to claim 4 a grid-like or otherwise designed element can be pressed into not yet hardened concrete during the construction of the stable or at a remote location (prefabrication). An effective and efficient anchoring of the element in the concrete floor is hereby ensured, as well as fixing of the mat thereon. The mat can then be arranged on the element at a later stage when the concrete has actually hardened, or in advance, i.e. before pouring of the concrete, or the mat and the element can form a unit.

According to claim 5 the element can preferably be connected to the mat. An example hereof is vulcanization of the element and the material of the mat. Due to the properties of the element functioning as intermediary a reliable connection between the concrete floor and the mat can thus be realized, which means a considerable improvement compared to the known art.

In a manner which is non-limitative for the invention an embodiment will be described below on the basis of a number of production steps in the realization thereof which are shown in the drawing, and in which:
fig. 1 shows a perspective view of a grid-like element according to the present invention;
fig. 2 shows schematically a perspective view of a step and a method for manufacturing a floor in a stable according to the present invention;
fig. 3 shows a step following on from the step in fig. 2;
fig. 4 shows a partly cut-away perspective view of a stable floor for a stable according to the present invention;
fig. 5 shows a perspective view of an embodiment wherein the mat and a grid-like element form a unit;
figures 6A and 6B show side views of diverse embodiments of the mat shown in fig. 5; and
fig. 7 shows a perspective view along arrow VII in fig. 5.

In the drawings of diverse embodiments the same reference numerals are used for like or similar elements and components.

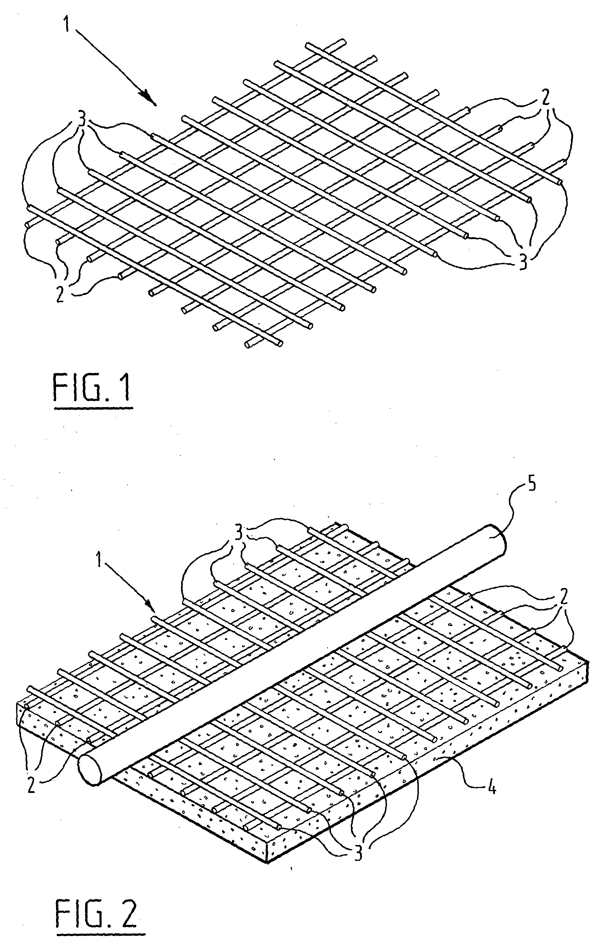

Fig. 1 shows a grid-like element 1, which can be used to form an intermediary component between a concrete stable floor and a mat thereon. The grid-like element 1 comprises a number of wires 2 located on the bottom in fig. 1 and also a number of wires 3 arranged on top of and fixedly connected to wires 2.

As shown in fig. 2, the grid-like element 1, being a specific embodiment of the invention given by way of example, can be pressed into a not yet hardened layer of concrete 4. The bottom wires 2 herein sink into the not yet hardened layer of concrete 4, which is brought about with a roller 5 or a press, this latter option not being shown. The wires 3 (on top of wires 2) herein remain visible and accessible in or above the surface of the layer of concrete 4 still to harden and for contact.

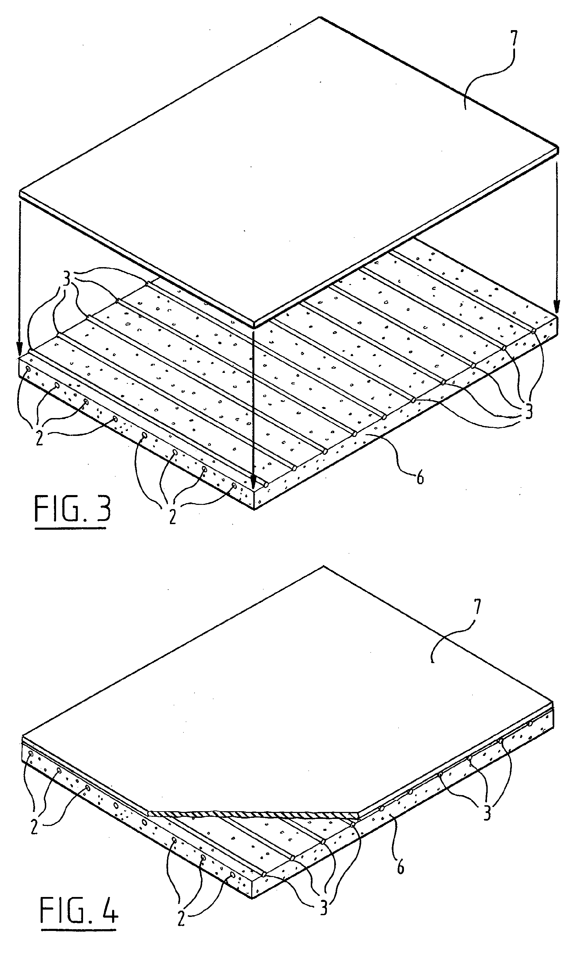

As shown in fig. 3, when the concrete has hardened at a later stage, a mat 7 can be placed on the hardened layer of concrete 6 and fastened to the upper wires 3 of grid-like element 1, wherein the wires 2 located under the surface of the hardened concrete 6 ensure a fixing of element 1 and the wires 3 located on top of grid-like element 1 lie exposed in the upper surface of the hardened concrete 6 for placing into contact with mat 7. The latter can take place by vulcanization, adhesion or in other manner with means which are readily suitable to fixedly connect the top wires 3 of grid-like element 1 to mat 7, where this would be considerably less readily possible without interposing of the grid-like element 1 functioning as intermediary.

The situation wherein the mat is fastened to the top wires 3 of grid-like element 1, and is therefore fixed relative to the hardened concrete 6 of the concrete floor is shown in fig. 4. Wires 2 are sunk into the hardened concrete and wires 3 of grid-like element 1 lie exposed on the surface of the hardened concrete 6. Mat 7 is adhered to the upper wires 3 and is therefore fixed relative to the hardened concrete 6, and can have a thickness corresponding with the intended effect of simulating a meadow in a stable without the necessity for a greater thickness.

Described in the foregoing is that grid-like element 1 is first pressed into not yet hardened concrete and mat 7 is arranged thereon later. In an alternative embodiment the mat 7 is provided beforehand with a grid-like element 1 by mutual connection thereto or to a similar configuration forming an intermediary. This is even recommended to some extent, since prefabricated elements can hereby be produced. In such a preferred embodiment, wherein mat 7 and a construction forming an intermediary are fastened to each other in advance, the mat can be placed with this construction on the top side thereof in a holder or the like and concrete is then poured thereover. The holder which is used here has dimensions such that prefabricated elements are manufactured with standard dimensions, which can facilitate placing at the intended location in the stable, to the extent that standard dimensions are also used in this stable. After pouring of the concrete over mat 7 with a random intermediary construction thereon, vibrations are used to distribute the concrete uniformly over the intermediary construction and cause it to permeate properly into the construction. The concrete is then left to harden and the thus produced prefabricated element with preferably standard dimensions can be turned over and placed and anchored at the intended location in the stable. The modification of an existing stable is also possible in this manner. In such a preferred embodiment it is therefore not the concrete and the grid-like element forming an intermediary that are connected to each other first, but the mat and the element. This has the advantage that the contact surfaces of the element forming an intermediary and the mat can be easily accessed and connected with certainty. If, conversely, the element forming an intermediary is cast into concrete first, fastening to the mat can cause difficulties, even if these difficulties are not insurmountable.

Fig. 5 shows an alternative embodiment to that of figures 1-4. Mat 7 herein forms a unit with a grid-like element 8. Grid-like element 8 comprises protrusions 9 on the side of mat 7 which is directed toward a layer of concrete 6 which has not yet hardened. Mat 7 is lowered along arrows A and B, in that order, and pressed into the not yet hardened concrete 6 so that air between mat 7 and concrete 6 has the opportunity to escape. Protrusions 9 are hereby pressed very deeply into concrete 6 and as little air as possible remains between mat 7 and concrete 6, which air could prevent a good adhesion.

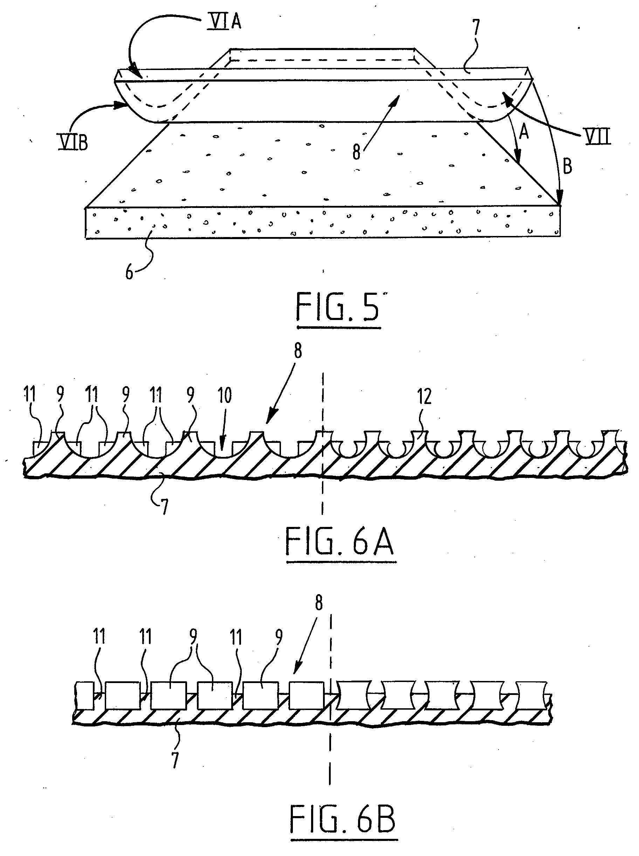

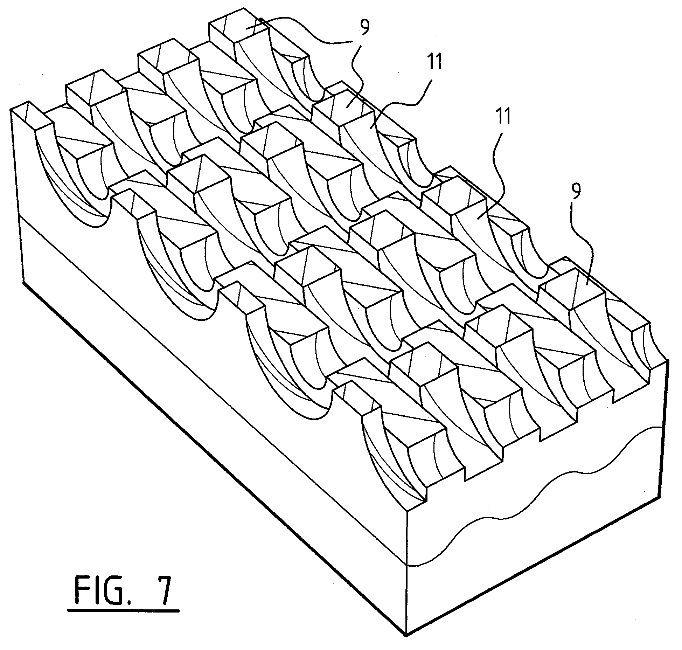

Protrusions 9 are placed in rows with channels 10 therebetween. Arranged between the protrusions 9 in a row as shown in fig. 6B are shoulders 11 which are wider than the protrusions 9 in the longitudinal direction of a row with protrusions 9, but wherein the shoulders 11 are formed lower than protrusions 9. This is shown in a perspective view in fig. 7.

A further improvement can be achieved when, as shown in figures 6A and 6B to the right of the broken lines, protrusions 12 have a narrowed portion followed by a widened portion in a direction away from mat 7. The adhesion of the not yet hardened concrete to the protrusions 12 can hereby be further optimized compared to the protrusions 9 extending straight upward from mat 7.

Such an embodiment is particularly favourable because the mat and the element form a unit and element 8 is formed by protrusions 9, 11 and/or 12, whereby a very durable fixation can be realized which is not easy to break, not even if a manure scraper is drawn over mat 7 (over the upper surface thereof, in the situation assembled with a concrete plate 6).

It is noted that many additional and alternative embodiments are also possible within the scope of the present invention, which have not been mentioned explicitly in the foregoing but which nevertheless fall within the scope of protection as defined in the appended claims. Instead of a grid-like element use can thus be made of discrete small elements sunk into not yet hardened concrete, to which the mat can then be or is fastened. Such elements sunk into the concrete may then already suffice when they are arranged for instance on the corner points of a mat for placing on the concrete floor, where fixing of this mat is concerned. It is further noted that the element which is described in the foregoing as a grid-like element does not have to be a grid-like element which is sunk into the not yet hardened concrete of the stable floor, but that it is equally possible to provide an existing stable floor, which has therefore already hardened, with a mat in the manner set forth according to the invention, by arranging anchors in the hardened concrete for fixing the mat to be positioned thereover. It is important for the present invention that between the hardened concrete floor and the mat there is arranged an intermediary (which can form an integral part of the mat), for instance in the form of a grid-like element and for instance in newly poured concrete, as described and shown here, but alternatively in other manner, in order to fix the mat relative to the concrete floor in the finally fitted situation. This is also clearly apparent from the definition of the present invention according to the appended claims, in particular the independent claim. It is otherwise noted that the situation of fig. 2 must be deemed as casting of the element as intermediary between the mat and the concrete floor. It is further noted that the element forming an intermediary between the concrete floor and the mat is intended particularly as mechanical engagement by the concrete floor 4 in order to subsequently form a number of continuous or discrete points of engagement for the mat to be arranged and fixed thereon, as for instance shown in fig. 4. The grid shape is not otherwise limitative and the rolling with roller 5 to press the grid-like element into not yet hardened concrete is certainly not intended to be limitative.

## Claims

1. Stable for livestock, comprising a building with a floor of concrete and a mat of a resilient material, such as plastic and/or rubber, on the concrete floor, wherein the mat is arranged on the stable floor and fixed against shifting by at least one element for fastening to the stable floor and for connecting to or connected to the mat.

2. Stable as claimed in claim 1, wherein the element is arranged in the concrete of the concrete floor and can be brought into or is in contact with the mat on the surface of the concrete floor for connection thereto.

3. Stable as claimed in claim 2, wherein the element takes the form of a grid.

4. Stable as claimed in claim 2 or 3, wherein the element is pressed into the not yet hardened concrete of the concrete floor under construction or is pressed at a remote location into not yet hardened concrete.

5. Stable as claimed in any of the foregoing claims, wherein the element is manufactured from a material to be connected to the mat.

6. Stable as claimed in claim 5, wherein the material of the element can be vulcanized with the material of the mat.

7. Stable as claimed in at least one of the claims 1-4, wherein the element and the mat form a unit.

8. Stable as claimed in claims 4 and 7, wherein the element comprises arrays of grid-like protrusions on the mat for enlarging the contact surface of parts of the element which are to be placed or are placed in the concrete for the purpose of a high degree of durable fixation.

9. Floor for a stable as defined in any of the foregoing claims.

10. Floor as claimed in claim 9, wherein the mat is connected in advance to a concrete plate so as to provide a prefabricated assembly.

11. Floor as claimed in claim 10, wherein the assembly has standard dimensions.

12. Element for fixing to a stable floor and connecting to a mat or as integral component thereof as claimed in at least one of the foregoing claims.
